# EUROPÄISCHE PATENTANMELDUNG

(11) **EP 1 834 753 A2**
(43) Veröffentlichungstag der Anmeldung: **19.09.2007**
(21) Anmeldenummer: 07002068.0
(22) Anmeldetag: 31.01.2007
(51) Int. Cl.: B29C 47/14, B29C 47/86, B29C 47/92

(54) **Verfahren zum Betreiben von Extrusionsanlagen zum Extrudieren von thermoplastischen Kunststoffen**

(30) Priorität: 15.03.2006 DE 102006012297
(71) Anmelder: Breyer GmbH Maschinenfabrik, 78224 Singen (DE)
(72) Erfinder: Breyer, Walter, 78239 Rielasingen-Worblingen (DE)
(74) Vertreter: Weiss, Peter

(57) **Zusammenfassung**

Bei einem Verfahren zum Betreiben von Extrusionsanlagen zum Extrudieren von thermoplastischen Kunststoffen mit einer Extrusionsanlage aus einer dieser nachgeschalteten Breitschlitzdüse (1), soll zur Beeinflussung einer Dicke einer Kunststoffschmelze ein Austrittsbereich (5) der Breitschlitzdüse (1) über dessen Breite zusätzlich in wählbaren Bereichen temperiert werden.

## Beschreibung

Die vorliegende Erfindung betrifft ein Verfahren zum Betreiben von Extrusionsanlagen zum Extrudieren von thermoplastischen Kunststoffen mit einer Extrusionsanlage aus einer dieser nachgeschalteten Breitschlitzdüse sowie eine Breitschlitzdüse zum Durchführen des Verfahrens.

Derartige Verfahren sowie Breitschlitzdüsen sind in vielfältiger Form und Ausführung bekannt. Extrudiertes Kunststoffmaterial wird über Extruderpressen extrudiert und über heizbare Breitschlitzdüsen ausgebracht, wobei meistens die flüssige extrudierte Kunststoffschmelze einem Glättwerk zur weiteren Behandlung zugeführt wird.

Unter Breitschlitzdüsen werden Plattendüsen, Foliendüsen etc. verstanden, die einen Düsenkanal aufweisen und die im Austrittsbereich entsprechende Lippenelemente bilden, wobei die Lippenelement starr, flexibel oder mit entsprechenden Verstelleinrichtung vorgesehen sein können. Alle Arten von Lippenelementen sollen hier umfasst sein.

Bei der Plattenherstellung werden Breitschlitzdüsen verwendet, bei welchen mittels Verstellmotoren ein Staubalken verstellt wird, um einen Schmelzefluss über die Düsenbreite einzustellen. Diese Einstellung der Dicke des Schmelzeflusses erfolgt manuell, was im Betrieb sowohl Ausschuss- oder zu Stillstandzeiten führt.

Bei der Herstellung von Folien werden Breitschlitzdüsen verwendet, die im Dickenbereich von etwa 0,1 bis 1,0 mm arbeiten. Dort werden Automatikdüsen eingesetzt. Dabei wird der Schmelzefluss durch eine lokale Zustellung von Stellelementen, insbesondere von Stellbolzen lokal verändert, um örtlich den Düsenaustrittsspalt an einer gewünschten Stelle zu verändern. Diese automatische rein mechanische Verstellung des lokalen Düsenspaltes erfolgt mit einer Kopplung mit einer dicken Messeinrichtung oder einer Wulstmessung, um eine Regelung durchzuführen.

Nachteilig hierbei ist, dass ein hoher Ausschuss durch eine lange Reaktionszeit bei einer Einstellung der Dicke im Betrieb produziert wird. Da diese Technologie auf dünne Plattenstärken beschränkt ist und durch entsprechend grosse Temperatursprünge auch in der Umgebung die Schmelze zu stark hinsichtlich ihrer Dicke beeinflusst wird, schwankt die Dicke der extrudierten Schmelze im Betrieb.

Der vorliegenden Erfindung liegt die Aufgabe zugrunde, ein Verfahren der eingangs genannten Art sowie eine Breitschlitzdüse zum Durchführen des Verfahrens zu schaffen, mit welchen auf einfache und kostengünstige Weise die Dicke der Kunststoffschmelze über die vollständige Breite an gewünschten lokalen Stellen automatisiert in Betrieb veränderbar ist. Zudem sollen die Regelgeschwindigkeiten im Betrieb erhöht und der Vorrichtungsaufwand hierfür deutlich minimiert werden können. Zudem sollen die Fertigungskosten, Produktionskosten gesenkt und die Produktionsgeschwindigkeit bei Minimierung des Ausschusses auch in den kritischen Randbereichen erhöht werden.

Zur Lösung dieser Aufgabe führen die Merkmale der Kennzeichnen der Patentansprüche 1 und 10.

Bei der vorliegenden Erfindung hat sich als besonders vorteilhaft erwiesen, einen Austrittsbereich der Breitschlitzdüse lokal an gewünschten Stellen zu erhitzen. Zusätzlich zu den im Düsenkörper herkömmlichen Heizeinrichtung sind hierzu im Austrittsbereich zusätzliche Heizelemente eingesetzt. Dabei sind die Heizelemente entweder in dem einen und/oder in dem anderen Lippenelement, vorzugsweise nahe des Austrittsbereiches über die vollständige Breite in geringfügigen Abständen vorgesehen. Vorzugsweise sind die Heizelemente austauschbar und auswechselbar in die Lippenelemente eingesetzt. Die Lippenelemente können starr und/oder als flexible Lippenelemente ausgebildet sein. Diese können auch entsprechende Schnellverstelleinrichtungen zur mechanischen Verstellung der Dicke des Düsenspaltes aufweisen.

Wichtig ist, dass die einzelnen Heizelemente einzeln oder zusammengefasst segmentartig ansteuerbar, regelbar und betreibbar sind, um gezielt regelbar bestimmte lokale Bereiche betrachtet über die Breite der Breitschlitzdüse unterschiedlich aufzuheizen bzw. zu temperieren.

Über die Temperatur bzw. über die Steuerung und Regelung der Austrittstemperatur unmittelbar im Austrittsbereich der Lippenelemente lässt sich die Dicke der Kunststoffschmelze über die Breite in unterschiedlichen Bereichen exakt einstellen, regeln und steuern.

Zudem ist möglich, dass durch die Einbringung der Heizelemente in das zumindest eine Lippenelement die äussere Form und Gestalt des Lippenelementes schmaler ausgebildet werden kann, sodass auch eine querschnittliche Geometrie des Austrittsbereiches der Breitschlitzdüse auf eine Geometrie der ersten beiden Walzen eines der Breitschlitzdüse nachgeschalteten Glättwerkes angepasst werden kann.

Auf diese Weise lässt sich der Austrittsbereich der Breitschlitzdüse näher in einen Walzenspalt zweier benachbarter Walzen des Glättwerkes einfahren, sodass ein Abstand zwischen Austrittsbereich der Breitschlitzdüse und einer Mitte des Walzenspaltes der ersten beiden Walzen des Glättwerkes minimiert ist. Auf diese Weise wird die Kunststoffschmelze keinen starken Umgebungseinflüssen und Temperaturen ausgesetzt, sondern gelangt ohne grosse Temperatureinwirkung von aussen ins Glättwerk und kann auf diese Weise homogener zu Folien und Platten verarbeitet werden.

Als Heizelemente können Heizpatronen od. dgl. elektrisch betriebene Heizelemente verwendet werden.

Es soll auch daran gedacht sein, dass durch entsprechende flüssige erhitzte Medien einzelne Bereiche separat ansteuerbar über die Breite der Lippenelemente durch Kanäle od. dgl. strömen und somit unterschiedliche Bereiche über die Breite der Breitschlitzdüse einzeln oder segmentweise regelbar temperierbar sind. Dies soll ebenfalls im Rahmen der vorliegenden Erfindung liegen.

Dabei hat sich auch als vorteilhaft bei der vorliegenden Erfindung erwiesen, dass die in geringfügigen Abständen zueinander beabstandeten einzelnen Heizelemente über die vollständige Breite angeordnet sind, und diese in dem einen und/oder anderen Lippenelement vorgesehen sind.

Dabei können diese über entsprechende Aufnahmebohrungen wiederlösbar und austauschbar eingesetzt werden, wobei die Heizelemente möglichst nahe am Düsenkanal in das Lippenelement eingesetzt sind.

Hierdurch lässt sich nicht nur eine homogene Kunststoffschmelze von homogener Dicke im Betrieb einstellen, sondern es können auch geringe Einschnürungen der Folien in den Randbereichen gewährleistet werden. Hierdurch wird eine effektivere Nutzbreite bei geringerem "nick in" gewährleistet.

Ferner ist durch ein derartiges Einsetzen der einzelnen Elemente der Breitschlitzdüse geschaffen, die keiner Biegung unterliegt. Ferner ist eine einfache Gestaltung des Düsenkörpers geschaffen, ohne dass mechanisch aufwendige Bauteile hierzu erforderlich sind.

Auf diese Weise ist auch die Gestaltung des Düsenkörpers selbst, insbesondere des Austrittsbereiches wesentlich freier möglich und anpassbar auf die entsprechenden Geometrien von Walspaarungen eines der Breitschlitzdüse nachgeschalteten Glättwerkes.

Durch die lokale unterschiedliche und einzeln einstellbare und regelbare Temperierung des einen und/oder andern Lippenelementes im Austrittsbereich über die Breite betrachtet, lässt sich im Betrieb eine sehr schnelle Regelung durch entsprechende Dicken und/oder Wulstmessung der Temperatur der einzelnen Heizelemente einstellen, um lokal die Dicke der austretenden Kunststoffschmelze durch die Temperatureinstellung zu regeln bzw. einzustellen. Dabei kann auf entsprechende herkömmliche mechanische Verstelleinrichtungen verzichtet werden, was auch für ein Biegeverhalten der Breitschlitzdüse von Vorteil ist.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Seitenansicht auf eine herkömmliche Breitschlitzdüse angeordnet über die beiden ersten Walzen eines hier nur angedeuteten Glättwerkes;
Figur 2 eine schematisch dargestellte Seitenansicht einer erfindungsgemässen Breitschlitzdüse zum Extrudieren von thermoplastischen Kunststoffen, mit angepasster Geometrie zum Einfahren zwischen einen Walzenspalt eines Glättwerkes;
Figur 3a eine schematisch dargestellte Seitenansicht auf eine Breitschlitzdüse mit erfindungsgemäss eingesetzten Heizelementen im oberen und unteren Lippenelement;
Figur 3b eine schematisch dargestellte Seitenansicht eines weiteren Ausführungsbeispiels der Breitschlitzdüse mit im unteren Lippenelement eingesetzte Heizelemente;
Figur 3c eine schematisch dargestellte Seitenansicht auf ein weiteres Ausführungsbeispiels einer weiteren Breitschlitzdüse mit erfindungsgemäss eingesetzten Heizelementen;
Figur 4 eine schematisch dargestellte perspektivische Seitenansicht auf eine Breitschlitzdüse gemäss Figur 3a;
Figur 5a eine schematisch dargestellte Draufsicht auf eine Breitschlitzdüse gemäss Figur 3a;
Figur 5b eine schematisch dargestellte Draufsicht auf eine weitere Ausführungsform der Breitschlitzdüse gemäss Figur 3a.

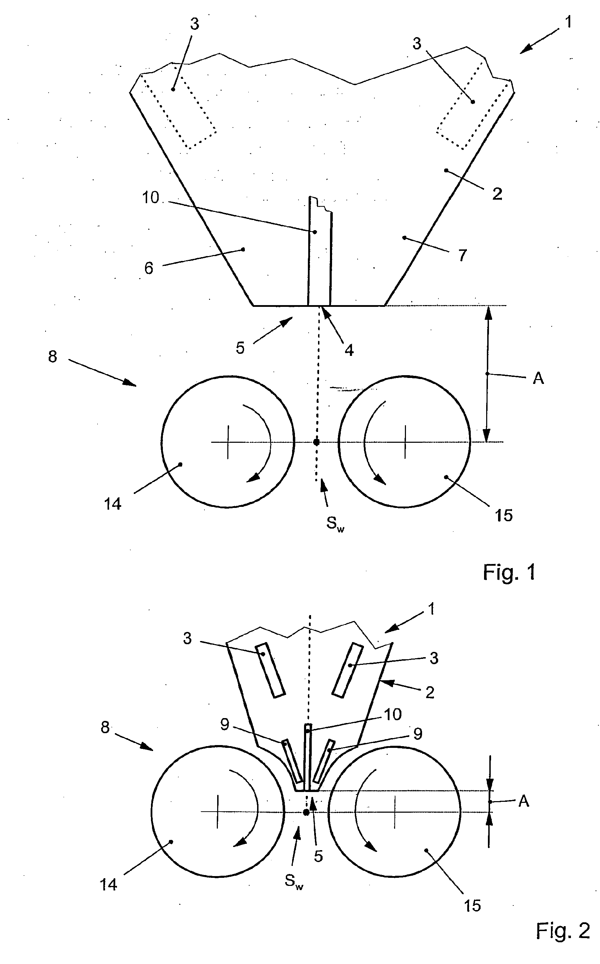

Gemäss Figur 1 weist eine herkömmliche Breitschlitzdüse 1 einen Düsenkörper 2 auf, der über herkömmliche Heizeinrichtizngen 3 zum Ausbringen von extrudiertem Kunststoffmaterial aus Extrusionsanlagen aus einem Düsenspalt 4 erwärmbar ist.

Dabei ist der Düsenkörper 2, insbesondere in einem Austrittsbereich 5 und einen Düsenkanal 10 unterteilt in Lippenelemente 6, 7, wobei die Lippenelemente 6, 7 als starre und/oder flexible Lippenelemente 6, 7 ausgebildet sein können.

Dabei können die Lippenelemente 6, 7 oder nur ein Lippenelement 6 oder 7 hier nicht näher dargestellte Verstelleinrichtungen, wie "fast-gap" Verstelleinrichtungen od. dgl. aufweisen, um automatisch oder mechanisch eine Verstellung des Düsenspaltes hinsichtlich seiner Dicke einzustellen. Diese Verstelleinrichtung dient einer schnellen Verstellung der Dicke des Austrittsbereiches des Düsenelementes.

Nachteilig bei der herkömmlichen Breitschlitzdüse ist, dass die eigentliche Beeinflussung der Dicke der extrudierten Kunststoffschmelze lediglich mechanisch über die Verstellung des Düsenspaltes 4 in einzelnen Bereichen erfolgt.

Zudem kühlt die Kunststoffschmelze zwischen dem Austrittsbereich 5 und einem hier in Figur 1 nur angedeuteten Glättwerk 8 mit Walzen 14, 15, welche in einen Walzenspalt S_{w} geführt wird ab, wobei sich hierdurch entsprechende ggf. unterschiedliche Temperaturveränderungen der Kunststoffschmelze unerwünscht einstellen.

Zwischen einer Mitte des Walzenspaltes S_{w} und im eigentlichen Austrittsbereich 5 der Breitschlitzdüse 1 ist ein Abstand A gebildet, der herkömmlich bedingt durch die Form der Breitschlitzdüse 1 gross gewählt ist.

Bedingt jedoch, durch entsprechend massiv ausgebildete Düsenkörper 2, die entsprechende Heizeinrichtungen 3 aufweisen um den gesamten Düsenkörper 2 zur Verflüssigung der Kunststoffschmelze zu erwärmen, ist eine Wahl eines geringen Abstandes. A zwischen dem Austrittsbereich 5 des Düsenkörpers 2 und der Mitte des Walzenspaltes S_{w} nicht möglich.

Bei der vorliegenden Erfindung hat es sich daher als besonders vorteilhaft erwiesen, wie es im Ausführungsbeispiel der vorliegenden Erfindung gemäss Figur 2 aufgezeigt ist, im Austrittsbereich 5 in den Düsenkörper 2 einer erfindungsgemässen Breitschlitzdüse 1 zusätzlich zu dem herkömmlichen Heizeinrichtungen 3 zusätzliche Heizelemente 9 einzusetzen.

Die Heizelemente 9 sitzen im vorderen Bereich der Lippenelemente 6, 7 und sind vorzugsweise über die vollständige Breite der Breitschlitzdüse 1, insbesondere der Lippenelemente 6, 7 nebeneinander geringfügig beabstandet angeordnet bzw. dort eingesetzt.

Die Heizelemente 9 beheizen vorzugsweise einen inneren Bereich des Düsenspaltes 4 nahe des Austrittsbereiches 5.

Dabei können die Heizelemente 9 einzeln, oder zusammengefasst zu mehreren Segmenten angesteuert oder geregelt werden, um eine bestimmte Temperatur einzustellen.

Dabei soll ferner im Rahmen der vorliegenden Erfindung liegen, dass die einzelnen Heizelemente entweder nur in dem einen Lippenelement 6 oder nur im anderen Lippenelement 7 oder in beiden Lippenelementen 6, 7, vorzugsweise im Austrittsbereich 5, angeordnet sind.

Durch die Ansteuerung der Heizelemente 9 einzeln oder segmentweise, können ganz bestimmte wählbare Bereiche, betrachtet über die Breite der Breitschlitzdüse 1, im Austrittsbereich 5 unterschiedlich im Betrieb temperiert werden.

Durch die unterschiedliche Temperierung der Kunststoffschmelze im Austrittsbereich 5 lässt sich Einfluss nehmen auf die Einstellung des Schmelzeflusses durch die Änderung der Düsenzonentemperatur und somit auf die Dicke der Kunststoffschmelze.

Dabei hat sich auch als besonders vorteilhaft bei der vorliegenden Erfindung erwiesen, dass sich die Temperatur für eine optimierte Düseneinstellung in unterschiedlichen Bereichen bzw. Segmenten über die vollständige Breite unterschiedlich im Austrittsbereich 5 innen einstellen lässt.

Hierdurch lässt sich im Betrieb über die entsprechenden zusätzlich an den Lippenelementen 6 und/oder 7 eingesetzten Heizelementen 9, der Schmelzefluss beliebig genau vergleichbar wie mit herkömmlichen flexiblen Lippen einstellen bzw. beeinflussen.

Hierdurch ist auch durch eine nachträgliche Anbindung an ein Dickenmesssystem oder an ein Wulstmesssystem eine Automatisierung der Wulsteinstellung optimiert.

Durch das zusätzliche Einsetzen der Heizelemente 9 im Austrittsbereich der Lippenelemente 6 und/oder 7 lässt sich insgesamt die Geometrie des Düsenkörpers 2 im Austrittsbereich 5 derart verändern, sodass die Breitschlitzdüse 1 näher an einem Walzenspalt S_{w} eines Glättwerkes 8 zwischen zwei Walzen 14, 15 heransgefahren werden kann, wie es in Figur 2 angedeutet ist.

Hierdurch wird ein Abstand A zwischen der Mitte des Walzenspaltes S_{w} und dem Austrittsbereich 5 der Breitschlitzdüse 1 wesentlich reduziert, was die Wulstbildung, sowie eine ungewünschte, ungleichmässige und unkontrollierte Abkühlung bzw. eine unterschiedliches Abkühlverhalten der Kunststoffschmelze durch bspw. Umgebungstemperatur stark minimiert.

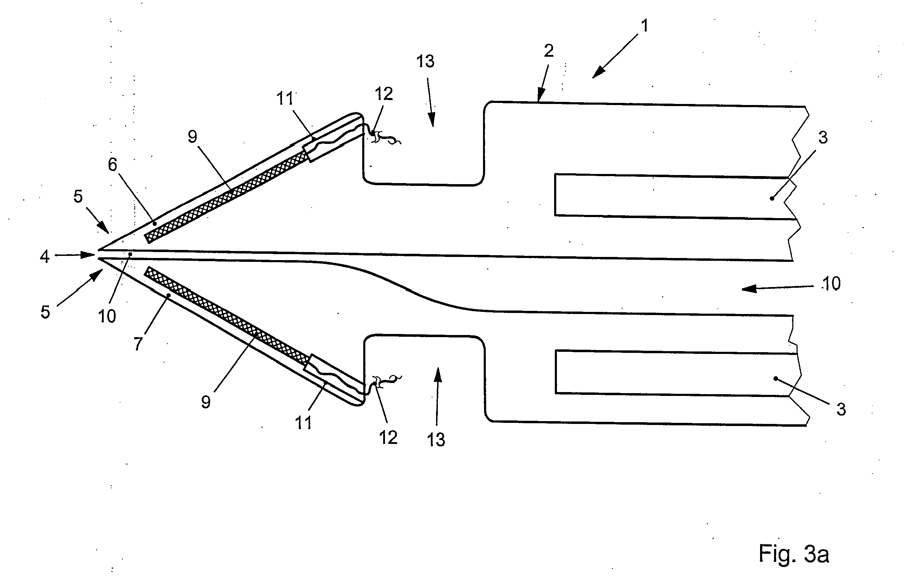

In dem Ausführungsbeispiel der vorliegenden Erfindung gemäss Figur 3a ist schematisch eine Seitenansicht einer weiteren Ausführungsform einer Breitschlitzdüse 1 aufgezeigt, bei welcher vorzugsweise im Austrittsbereich 5 in die jeweiligen Lippenelemente 6, 7 die entsprechenden Heizelemente 9 in entsprechende Aufnahmebohrungen 11 eingesetzt sind.

Über entsprechende elektrische Verbindungsleitungen 12 lassen sich die Heizelemente 9 einzeln oder segmentweise, die über die vollständige Breite der Breitschlitzdüse 1, geringfügig zueinander beabstandet, einsetzen, ansteuern und mit Strom zur Erwärmung der Lippenelemente 6, 7 versorgen.

Auf diese Weise lässt sich über die vollständige Breite eine unterschiedliche Temperierung des Düsenkanales 10 im Austrittsbereich 5 einstellen, sodass durch die unterschiedliche Temperierung über die Breite der Breitschlitzdüse 1 betrachtet, Einfluss genommen werden kann auf den Schmelzefluss und somit auf eine Einstellung der Dicke der extrudierten Kunststoffschmelze.

Die herkömmlichen Heizeinrichtungen 3, verbleiben herkömmlich wie vor im Düsenkörper 2. Lediglich werden die zusätzlichen Heizelemente 9 in den Lippenelementen 6, 7 ergänzend nahe im Austrittsbereich 5 eingesetzt.

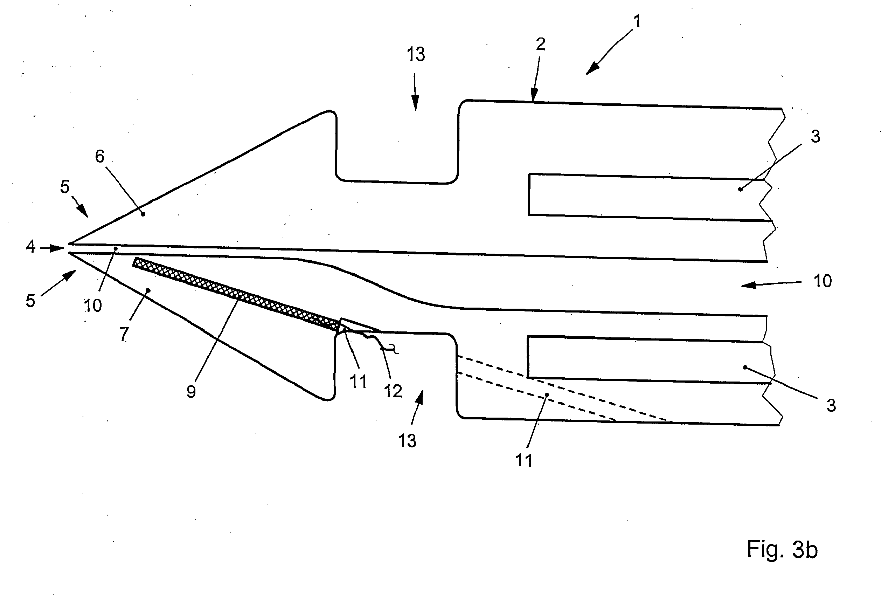

In dem Ausführungsbeispiel gemäss Figur 3b ist schematisch eine weitere Breitschlitzdüse 1 aufgezeigt, in welcher lediglich in einem der beiden Lippenelemente 6 oder 7 bevorzugt geringfügig beabstandet über die vollständige Breite mehrere Heizelemente 9 eingesetzt sind. Diese werden in oben beschriebener Weise betrieben.

Ein weiterer Unterschied zu Figur 3a ist, dass die Heizelemente 9 mit ihren Aufnahmebohrungen 11 möglichst flach in einem sehr spitzen Winkel in das Lippenelement 7 eingesetzt sind, um möglichtst nahe innen an den Düsenkanal 10 Wärme zu übertragen.

Bevorzugt werden die Heizelemente 9 über die Aufnahmebohrungen 11 in die Lippenelemente 6, 7 eingesetzt, ausgehend von einer Aufnahmenut 13 zum Einsetzen von herkömmlichen Verstelleinrichtungen etc..

Um ein möglichst flaches Einsetzen der Heizelemente 9 zu ermöglichen, die auch als Patronen ausgebildet sein können, ist auch denkbar im Düsenkörper 2 entsprechende zusätzliche.

Aufnahmebohrungen 11 als zusätzliche Einführhilfen vorzusehen.

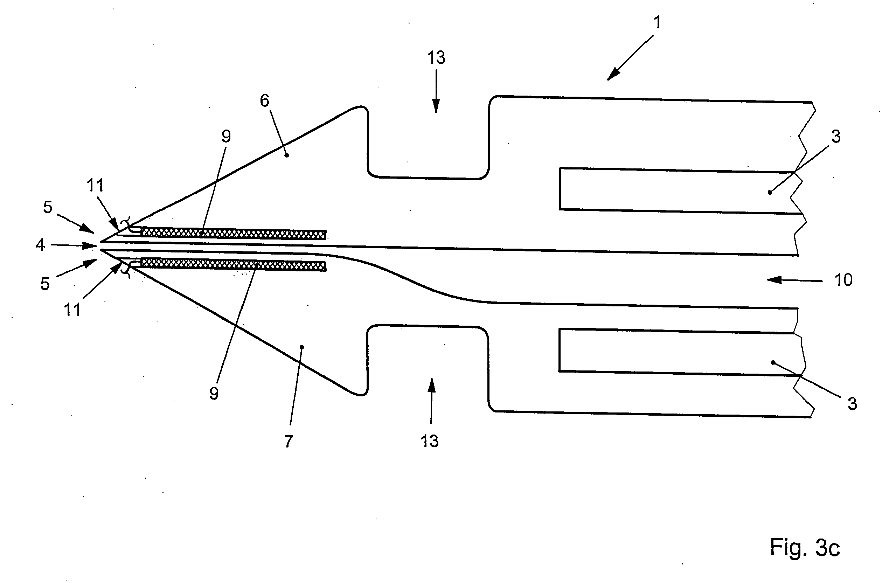

In dem Ausführungsbeispiel gemäss Figur 3c ist eine weitere Breitschlitzdüse 1 aufgezeigt, bei welcher möglichst nahe in zumindest ein Lippenelement 6 und/oder 7, vorzugsweise über die vollständige Breite der Breitschlitzdüse 1, parallel zueinander geringfügig beabstandet, die Heizelemente 9 nahezu parallel zum Düsenkanal 10 eingesetzt sein können.

Dabei können die Heizelemente 9 auch von vorn, bzw. vom Austrittsbereich 5 aus, in die jeweiligen Lippenelement 6, 7 über die Aufnahmebohrung 11 eingesetzt werden. Dies soll ebenfalls im Rahmen der vorliegenden Erfindung liegen.

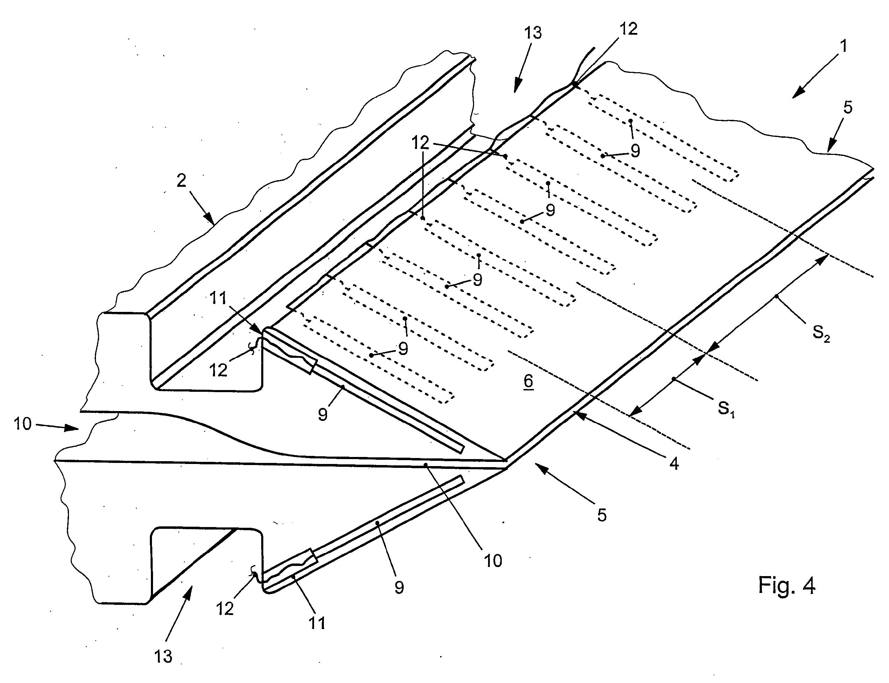

Im Ausführungsbeispiel der vorliegenden Erfindung gemäss Figur 4 ist eine perspektivische Ansicht der Breitschlitzdüse 1 aufgezeigt, bei welcher in den jeweiligen Lippenelementen 6, 7 ähnlich gemäss dem Ausführungsbeispiel nach Figur 3a, jeweils parallel zueinander beabstandet in geringfügigen Abständen die Heizelemente 9 in die Lippenelemente 6, 7 eingesetzt sind.

Dabei können über die jeweiligen Verbindungsleitungen 12 die einzelnen Heizelemente 9 einzeln unterschiedlich oder in wählbaren Segmenten S₁, S₂ angesteuert bzw. betrieben werden.

Auf diese Weise lassen sich einzeln gezielte Bereiche oder Segmente über die Breite der Breitschlitzdüse 1 unterschiedlich temperieren bzw. betreiben.

Auf diese Weise lässt sich ein Bereich bis etwa 150 mm, ausgehend vom Austrittsbereich 5 der Lippenelemente 6 und/oder 7 insbesondere im Düsenkanal 10 über die vollständige Breite unterschiedlich regelbar temperieren, um eine Dicke der austretenden extrudierten Kunststoffschmelze im Betrieb permanent zu beeinflussen und zu verändern.

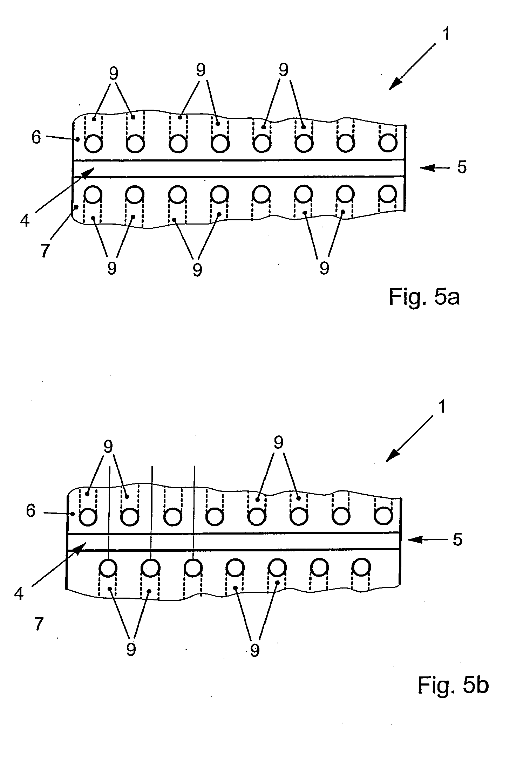

In den Figuren 5a und 5b sind jeweils entsprechende Breitschlitzdüsen 1 aufgezeigt, wobei in dessen Lippenelementen 6, 7 jeweils zueinander beabstandet die Heizelemente 9 eingesetzt sind.

Dabei fluchten in dem Ausführungsbeispiel gemäss Figur 5a bei der Breitschlitzdüse 1 die Heizelemente 9 im Lippenelement 6 zu den Heizelementen 9 des darunter liegenden Lippenelementes 7.

In dem Ausführungsbeispiel der vorliegenden Erfindung gemäss Figur 5b sind die Heizelemente 9 des Lippenelementes 6 zu den Heizelementen 9 des Lippenelementes 7 zueinander versetzt angeordnet. Dies soll ebenfalls im Rahmen der vorliegenden Erfindung liegen. Hierdurch lässt sich eine noch feinere Beeinflussung in geringeren Abständen der Dicke der Schmelze im Betrieb vornehmen.

### Bezugszeichenliste

| | | | | | |
|---|---|---|---|---|---|
| 1 | Breitschlitzdüse | 34 | | 67 | |
| 2 | Düsenkörper | 35 | | 68 | |
| 3 | Heizeinrichtunge n | 36 | | 69 | |
| 4 | Düsenspalt | 37 | | 70 | |
| 5 | Austrittsbereich | 38 | | 71 | |
| 6 | Lippenelement | 39 | | 72 | |
| 7 | Lippenelement | 40 | | 73 | |
| 8 | Glättwerk | 41 | | 74 | |
| 9 | Heizelement | 42 | | 75 | |
| 10 | Düsenkanal | 43 | | 76 | |
| 11 | Aufnahmebohrung | 44 | | 77 | |
| 12 | Verbindungsleitungen | 45 | | 78 | |
| 13 | Aufnahmenut | 46 | | 79 | |
| 14 | Walze | 47 | | | |
| 15 | Walze | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Betreiben von Extrusionsanlagen zum Extrudieren von thermoplastischen Kunststoffen mit einer Extrusionsanlage aus einer dieser nachgeschalteten Breitschlitzdüse (1),
**dadurch gekennzeichnet,**
**dass** zur Beeinflussung einer Dicke einer Kunststoffschmelze ein Austrittsbereich (5) der Breitschlitzdüse (1) über dessen Breite zusätzlich in wählbaren Bereichen temperiert wird.

2. Verfahren nach Anspruch 1, **dadurch gekennzeichnet, dass** einzeln und/oder in Bereichen unterteilt, auf die vollständige Breite der Breitschlitzdüse (1), zumindest ein Lippenelement (6 und/oder 7) temperiert wird, um in bestimmten Bereichen die Dicke der austretenden Kunststoffschmelze im Betrieb regelbar zu verändern.

3. Verfahren nach Anspruch 1 oder 2, **dadurch gekennzeichnet, dass** ein oder mehrere Bereiche der Breitschlitzdüse (1) unterschiedlich regelbar temperiert werden.

4. Verfahren nach wenigstens einem der Ansprüche 1 bis 3, **dadurch gekennzeichnet, dass** eine Temperierung, insbesondere eine Temperaturbeeinflussung, insbesondere Erwärmung der Breitschlitzdüse (1) unmittelbar im Austrittsbereich (5), insbesondere im Bereich der Austrittsöffnung (5) in dem einen und/oder anderen Lippenelement (6, 7) einzeln oder bereichsweise regelbar über die vollständige Breite zur Beeinflussung der Dicke der austretenden Kunststoffschmelze erfolgt.

5. Verfahren nach wenigstens einem der Ansprüche 1 bis 4, **dadurch gekennzeichnet, dass** die Temperierung des Austrittsbereiches (5), des einen und/oder anderen Lippenelementes (6, 7) der Breitschlitzdüse (1) einseitig und/oder beidseitig durch entsprechend vorgesehene Heizelemente (9) erfolgt.

6. Verfahren nach wenigstens einem der Ansprüche 1 bis 5, **dadurch gekennzeichnet, dass** einzeln oder segmentweise über die vollständige Austrittsbreite der Breitschlitzdüse (1) eine Temperierung der Lippenelemente (6) und/oder (7) nahe des Austrittsbereiches (5) zur Beeinflussung der Dicke der austretenden Kunststoffschmelze erfolgt.

7. Verfahren nach wenigstens einem der Ansprüche 1 bis 6, **dadurch gekennzeichnet, dass** die Lippenelemente (6, 7), insbesondere der Austrittsbereich (5) geometrisch derart angepasst ist, dass dieser zwischen Walzen (14, 15) eines anschliessenden Glättwerkes nahe an einen Walzenspalt (S_{w}) eingefahren wird.

8. Verfahren nach wenigstens einem der Ansprüche 1 bis 7, **dadurch gekennzeichnet, dass** die Breitschlitzdüse (1), insbesondere das zumindest eine Lippenelement (6, 7), ausgehend von der Austrittsöffnung (4) in ein Heizbereich von bis zu etwa 100 bis 150 mm Breite, über die vollständige Breite temperiert wird.

9. Verfahren nach wenigstens einem der Ansprüche 1 bis 8, **dadurch gekennzeichnet, dass** eine Geometrie der Breitschlitzdüse (1) im Austrittsbereich (5) in etwa auf die Geometrie zweier benachbarter Walzen (14, 15) eines Glättwerkes angepasst wird und somit der Austrittsbereich (5) der Breitschlitzdüse (1) näher zwischen einem Walzenspalt (S_{w}) der beiden benachbarten ersten und zweiten Walzen (14, 15) des Glättwerkes eingefahren wird, wobei durch permanente Dicken- und/oder Wulstmessung der ausgetretenen Kunststoffschmelze vor Eintreten in das Glättwerk oder nach Austreten aus dem Glättwerk eine lokale Temperaturregelung einzelner Heizelemente (9) oder segmentweise zusammengefasster Heizelemente (9) im Betrieb dicken- oder wulstabhängig erfolgt.

10. Breitschlitzdüse zum Extrudieren von thermoplastischen Kunststoffen aus einer Extrusionsanlage, wobei eine Kunststoffschmelze aus einem Düsenspalt (4), benachbarter Lippenelemente (6, 7) extrudierbar und ein Düsenkörper (2) erwärmbar ist,
**dadurch gekennzeichnet,**
**dass** nahe eines Austrittsbereiches (5), das zumindest eine Lippenelement (6) und/oder (7) regelbar temperierbar ist.

11. Breitschlitzdüse nach Anspruch 10, **dadurch gekennzeichnet, dass** dem Austrittsbereich (5), insbesondere dem zumindest einen Lippenelementes (6, 7), über die vollständige Breite eine Mehrzahl von Heizelemente (9) zugeordnet sind.

12. Breitschlitzdüse nach Anspruch 11, **dadurch gekennzeichnet, dass** die Mehrzahl von Heizelemente (9) einzeln oder segmentweise über die vollständige Austrittsbreite ansteuerbar sind, um einzelne Bereiche oder einzelne Segmente (S₁, S₂) und Bereiche des Austrittsbereiches (5) steuerbar bzw. regelbar im Betrieb zu temperieren.

13. Breitschlitzdüse nach wenigstens einem der Ansprüche 10 bis 12, **dadurch gekennzeichnet, dass** der Austrittsbereich (5) innen einseitig und/oder beidseitig über die vollständige Austrittsbreite in kleinen oder segmentartigen Bereichen temperierbar ist.

14. Breitschlitzdüse nach wenigstens einem der Ansprüche 11 bis 13, **dadurch gekennzeichnet, dass** eine Mehrzahl von Heizelementen (9) in dem einen und/oder anderen Lippenelement (6, 7) über die vollständige Austrittsbreite nahe des Austrittsbereiches (5) patronenartig und auswechselbar eingesetzt sind.

15. Breitschlitzdüse nach wenigstens einem der Ansprüche 11 bis 14, **dadurch gekennzeichnet, dass** einzelne Heizelemente (9) oder eine Mehrzahl von nebeneinander angeordneten Heizelementen (9) segmentartig regelbar, ansteuerbar sind, um einzelne oder grössere Bereiche nahe des Austrittsbereiches (5) der Lippenelemente (6, 7) düsenkanalseitig zu temperieren.

16. Breitschlitzdüse nach wenigstens einem der Ansprüche 10 bis 15, **dadurch gekennzeichnet, dass** eine Geometrie des Düsenkörpers (2), insbesondere im Austrittsbereich (5) der Lippenelemente (6, 7) anpassbar ist auf eine Geometrie zweier Walzen (14, 15) eines an den Austrittsbereich (5) anschliessenden Glättwerkes.

17. Breitschlitzdüse nach wenigstens einem der Ansprüche 10 bis 16, **dadurch gekennzeichnet, dass** durch die Anpassung der Austrittsgeometrie des Austrittsbereiches (5) der Lippenelemente (6, 7) der Düsenkörper (2) tiefer in dem Walzenspalt (S_{w}) zweier benachbarter Walzen (14, 15) eines Glättwerkes einfahrbar ist.

18. Breitschlitzdüse nach wenigstens einem der Ansprüche 11 bis 17, **dadurch gekennzeichnet, dass** die Heizelemente (9) als Heizpatronen elektrisch betreibbar und ansteuerbarer ausgebildet, sowie im vorderen Austrittsbereich (5) der Lippenelemente (6, 7) über die vollständige Breite nebeneinander eingesetzt sind.

19. Breitschlitzdüse nach wenigstens einem der Ansprüche 11 bis 18, **dadurch gekennzeichnet, dass** die Heizelemente (9) über die vollständige Breite in dem einen oder nur in dem anderen Lippenelement (6, 7) angeordnet sind, und einzeln oder segmentweise zur Beeinflussung einer Dicke einer austretenden Kunststoffschmelze regelbar, temperierbar und ansteuerbar sind.

20. Breitschlitzdüse nach wenigstens einem der Ansprüche 11 bis 19, **dadurch gekennzeichnet, dass** bei der Anordnung von mehreren Heizelementen (9) nebeneinander in den jeweiligen Lippenelementen (6, 7), die Heizelemente (9) der beiden Lippenelemente (6, 7) gegenüberliegend exakt übereinander oder versetzt zueinander den beiden gegenüberliegenden Lippenelementen (6, 7) angeordnet sind.

21. Breitschlitzdüse nach wenigstens einem der Ansprüche 10 bis 20, **dadurch gekennzeichnet, dass** durch permanente Dicken- und/oder Wulstmessung der ausgetretenen Kunststoffschmelze vor Eintreten in das Glättwerk oder nach Austreten aus dem Glättwerk eine lokale Temperaturregelung einzelner Heizelemente oder segmentweise zusammengefasster Heizelemente im Betrieb dickenabhängig oder wulstabhängig erfolgt.
